Europäisches Patentamt

European Patent Office

Office européen des brevets

(19)

(11) Veröffentlichungsnummer: **0 220 408**
**B1**

(12) **EUROPÄISCHE PATENTSCHRIFT**

(45) Veröffentlichungstag der Patentschrift:
**07.03.90**

(51) Int. Cl.⁴: **H02H 3/04**

(21) Anmeldenummer: **86111477.5**

(22) Anmeldetag: **19.08.86**

(54) **Selbstüberwachender Fehlerstromschutzschalter.**

(30) Priorität: **18.10.85 DE 3537140**

(43) Veröffentlichungstag der Anmeldung:
**06.05.87 Patentblatt 87/19**

(45) Bekanntmachung des Hinweises auf die Patenterteilung:
**07.03.90 Patentblatt 90/10**

(84) Benannte Vertragsstaaten:
**AT BE CH DE FR GB IT LI NL SE**

(56) Entgegenhaltungen:
**DE-A- 1 944 241**
**DE-A- 2 943 725**
**US-A- 3 786 356**

(73) Patentinhaber: **Werner Turck GmbH & Co. KG,
Goethestrasse 7, D-5884 Halver(DE)**

(72) Erfinder: **Tigges, Burkhard, Heinsberger Strasse 26,
D-5942 Kirchhundem 1(DE)**

(74) Vertreter: **Peerbooms, Rudolf, Dipl.-Phys.,
Postfach 200 208 Dickmannstrasse 45C,
D-5600 Wuppertal 2(DE)**

## Beschreibung

Die Erfindung betrifft einen Fehlerstromschutzschalter zur Isolationsüberwachung elektrischer Stromkreise, mit einem Summenstromwandler, dessen Primärstromkreis aus den hindurchgeführten Hin- und Rückleitungen des zu überwachenden Stromkreises besteht und dessen Sekundärwicklung auf eine elektronische Grenzwertschaltung wirkt, mit einer von der elektronischen Grenzwertschaltung angesteuerten, eine Spule aufweisenden elektromagnetischen Halteeinrichtung und mit von der elektromagnetischen Halteeinrichtung gesteuerten Schaltkontakten zur Abschaltung des zu überwachenden Stromkreises bei Überschreiten eines bestimmten Fehlerstromes, wobei in eine zusätzliche Wicklung des Summenstromwandlers periodisch kurzzeitig Stromstöße eingespeist werden, welche einen Fehlerstrom simulieren, und wobei die dadurch am Ausgang der elektronischen Grenzwertschaltung entstehende Pulsspannung einer Auswerteschaltung zugeführt und ebenfalls zur Aussteuerung der elektromagnetischen Haltevorrichtung verwendet wird.

Fehlerstromschutzschalter (DE-PS 552 678) werden in elektrischen Anlagen zur Isolationsüberwachung zum Schutz gegen Brandgefahren durch Erdschlußströme und zum Schutz von Personen gegen elektrischen Schlag eingesetzt. Unter Fehlerstrom wird ein elektrischer Strom verstanden, der durch einen Isolationsfehler auf unbeabsichtigten Wegen zum Fließen kommt. Der Wert eines solchen Fehlerstromes ergibt sich dabei aus der Differenz der Werte zwischen den in die Anlage hineinfließenden und den aus der Anlage herausfließenden Strömen. Der Fehlerstromschutzschalter hat die Aufgabe, den zu überwachenden Anlagenteil vollständig vom Stromversorgungsnetz zu trennen, wenn der Fehlerstrom einen vorbestimmten Wert überschreitet.

Es sind Fehlerstromschutzschalter bekannt, die einen Summenstromwandler enthalten, bei dem alle den Betriebsstrom des zu überwachenden Anlagenteiles führenden Leiter, also Hin- und Rückleiter, so durch einen Stromwandlerkern geführt sind, daß der magnetische Fluß im Stromwandlerkern der Summe der Betriebsströme, d.h. unter Berücksichtigung der gedachten Fließrichtung, der Differenz der Werte zwischen den in die Anlage hineinfließenden und den aus der Anlage herausfließenden Strömen entspricht. Die Sekundärwicklung des Summenstromwandlers führt damit einen unmittelbar zum Fehlerstrom proportionalen Strom. Dieser Sekundärstrom beaufschlagt einen Auslösemagneten. Überschreitet der Fehlerstrom einen bestimmten, durch die Konstruktion festgelegten Wert, so löst der Auslösemagnet eine mechanische Verriegelung der Schaltkontakte, die dadurch mittels Federkraft öffnen und den zu überwachenden Stromkreis abschalten. Diese Abschaltung erfolgt üblicherweise sehr schnell, z.B. innerhalb von 0,2 Sekunden. Die geöffneten Kontakte können mit Hilfe einer Taste gegen die Federkraft wieder geschlossen werden. Eine mechanische Verriegelung hält dann die Kontakte geschlossen, solange kein Fehlerstrom entsprechender Höhe fließt. Die Taste zum Einschalter ist dabei mittels einer mechanisch wirkenden Freiauslösung so ausgeführt, (vgl. z.B. DE-PSen 31 42 522 und 33 41 874), daß es nicht möglich ist, durch eine dauernde Betätigung der Taste die Kontakte in geschlossener Stellung festzuhalten, wenn ein zu hoher Fehlerstrom die Verriegelung auslöst.

Bei Isolationsfehlern in Geräten mit Metallgehäusen fließt der Fehlerstrom normalerweise über den mit dem Gehäuse verbundenen Schutzleiter ab. Der Fehlerstromschutzschalter schaltet dabei das Gerät unmittelbar beim Auftreten eines entsprechenden Isolationsfehlers ab. Der Nennfehlerstrom, bei dessen Überschreitung der Fehlerstromschutzschalter abschaltet, kann dabei unabhängig vom Betriebsstrom niedrig gewählt werden. Dadurch wird ein ausgezeichneter Schutz gegen Brandgefahren durch Erdschlußströme erreicht. Durch die rasche Abschaltung kann die bei einem Isolationsfehler an berührbaren Metallteilen liegende Spannung nur ganz kurzzeitig gefährliche Werte annehmen, so daß auch ein sehr guter Schutz für Personen gegen elektrischen Schlag gewährleistet ist. Bei Verwendung von Fehlerstromschutzschaltern mit niedrigem Nennfehlerstrom z. B. 30 mA oder 10 mA, ist ein Schutz für Personen gegen elektrischen Schlag auch dann noch gegeben, wenn der Schutzleiter unterbrochen ist oder eine direkte Berührung stromführender Teile vorliegt. Der dabei über die Person abfließende Fehlerstrom bringt den Fehlerstromschutzschalter zum Abschalten des Stromes, ohne daß die Person dabei gesundheitlich geschädigt wird.

Es ist ersichtlich, daß der Vorteil bei der Verwendung von Fehlerstromschutzschaltern in der besonders großen Schutzwirkung liegt. Dem steht als wesentlicher Nachteil entgegen, daß ein Versagen der Funktionsfähigkeit des Fehlerstromschutzschalters nicht bemerkt werden muß. Insbesondere bei den Fehlerstromschutzschaltern mit niedrigen Nennfehlerströmen, bei denen die aus dem Fehlerstrom zur Verfügung stehende Leistung zur Betätigung des Auslösemagneten gering ist, kann wegen der erforderlichen Mechanik die Funktionsbereitschaft nicht auf eine unbestimmte Zeit gewährleistet werden. Deshalb ist bei den bekannten Fehlerstromschutzschaltern nach DE-A 2 943 725 eine regelmäßige Funktionsprüfung vorgesehen. Dazu haben diese Fehlerstromschutzschalter eine Prüftaste, bei deren Betätigung ein durch einen Widerstand festgelegter Strom absichtlich am Summenstromwandler vorbeigeleitet wird, was zur Auslösung des Fehlerstromschutzschalters führen muß.

Zur Verminderung dieses Nachteils sind Fehlerstromschutzschalter entwickelt worden, bei denen der Sekundärstrom des Summenstromwandlers nicht unmittelbar zur Betätigung des Auslösemagneten verwendet wird, sondern der Sekundärstrom des Summenstromwandlers einer elektronischen Schaltung zugeführt wird, die beim Überschreiten des Nennfehlerstromes die Abschaltung auslöst. Dabei kann dann ein Auslösemagnet mit höherer Leistung verwendet werden. Es kann aber auch anstelle des Auslösemagneten ein Haltemagnet verwendet werden, der nach Art eines Relais oder Schützes die Schaltkontakte für den zu überwachenden Stromkreis in ständig stromdurchflossenem Zustand geschlossen hält. Bei Überschreiten des Nennfehlerstromes bewirkt dann die elektronische Schaltung eine Unterbrechung des Haltemagnetstromes und dadurch ein Öffnen der Schaltkontakte und Abschalten des zu überwachenden Stromkreises. Bei derartigen Konstruktionen kann die Anfälligkeit für mechanische Fehler, die zu einem unerkannten Versagen der Funktionsbereitschaft führen, vermindert werden. Dafür entstehen aber in der elektronischen Schaltung neue Fehlermöglichkeiten, so daß auf die regelmäßige Funktionsprüfung nicht verzichtet werden kann.

Durch die US-A 3 786 356 ist ein gattungsgemäßer Fehlerstromschutzschalter bekannt, bei dem ein Fehlerstrom zwischen Stromkreis-Hinleitung und Erde erfaßt werden soll. Dort ist die Empfindlichkeit der Fehlerstromerfassung abhängig davon, ob sich ein Fehlerstromweg zwischen Stromkreis-Rückleitung und Erde ausgebildet hat, was u. U. zu einem Nichterfassen eines Fehlerstromes führen kann. Um diese Gefahr auszuschließen, wird dort in die zusätzliche Wicklung des Summenstromwandlers periodisch ein Testsignal eingespeist, welches über die Sekundärwicklung des Summenstromschalters die Empfindlichkeit des Fehlerstromerfassungskreises prüft und ein Signal erzeugt, welches ständig mit einem vom Testsignal abgeleiteten Referenzsignal verglichen wird. Liegt ein Fehlerstromweg zwischen Rückleitung und Erde vor, weichen Referenzsignal und erzeugtes Signal voneinander ab, was über einen separaten Vergleicher eine Unterbrechung des zu überwachenden Stromkreises auslöst. Dieser bekannte Fehlerstromschutzschalter ist aber z.B. bezüglich des Ausfalls von Bauelementen der Fehlerstromvergleichsstufe, deren Empfindlichkeit während des Tests reduziert wird, nicht eigensicher.

Der Erfindung liegt die Aufgabe zugrunde, einen Fehlerstromschutzschalter zu entwickeln, bei dem die regelmäßige Funktionsprüfung entfallen kann, indem sich der Fehlerstromschutzschalter während der gesamten Betriebsdauer ständig selbst überwacht. Zusätzlich soll der Fehlerstromschutzschalter auch bei Unterbrechung der Stromzuführung abschalten und bei Wiederkehr der Stromzuführung nicht selbsttätig wieder einschalten.

Ausgehend von einem Fehlerstromschutzschalter der eingangs genannten Art, ist die Lösung dieser Aufgabe erfindungsgemäß dadurch erreicht, daß bei Normalbetrieb die Spule erregt ist und die Kontakte bei Entregung der Spule öffnen, daß die Grenzwertschaltung, die Spule und die Auswerteschaltung gemeinsam einen Oszillator bilden, welcher die in die zusätzliche Wicklung eingespeisten Stromstöße erzeugt und dessen Schwingungsfähigkeit bei Auftreten eines echten Fehlerstromes unterbrochen wird, daß die periodischen Stromstöße jeweils eine so kurzzeitige Entregung der Spule bewirken, daß die elektromagnetische Halteeinrichtung über diese Entregungszeiten im angezogenen Zustand verbleibt und der Schwingkreis seine Schwingungsfähigkeit behält, und daß bei Unterbrechung der Schwingungsfähigkeit des Schwingkreises, – z. B. auch infolge Defektes einer seiner Bauteile –, die Spule dauerhaft entregt wird, so daß die Halteeinrichtung ein Öffnen der Schaltkontakte und damit ein Abschalten des zu überwachenden Stromkreises bewirkt.

Durch diese Maßnahmen wird eine sichere sofortige Abschaltung des zu überwachenden Stromkreises bewirkt, wenn der Fehlernennstrom überschritten wird. In einem solchen Falle tritt am Ausgang der elektronischen Grenzwertschaltung ständig eine so hohe Spannung auf, daß die elektrische Überwachungsschaltung ihre Schwingungsfähigkeit verliert und also keine kurzzeitigen Stromstöße zur Speisung der zusätzlichen Wicklung des Summenwandlers mehr erzeugen kann. In gleicher Weise wird eine sichere Abschaltung bei Stromausfall erreicht, da in diesem Falle ebenfalls die Überwachungsschaltung nicht mehr periodisch die kurzzeitigen Stromstöße für die zusätzliche Wicklung erzeugen kann. Durch die Ausbildung der Überwachungsschaltung als insgesamt schwingender Kreis sind alle Teile der Elektronik an einer ordnungsgemäßen Funktion beteiligt, so daß bei Ausfall eines der Elektronikbauteile ebenfalls eine sichere Abschaltung bewirkt wird.

Gemäß einer speziellen Ausgestaltung der Erfindung enthält die Auswerteschaltung eine Gleichrichter-Spannungs-Verdoppler-Schaltung, wodurch die Ansprechempfindlichkeit auf einen Fehlerstrom erhöht wird, bzw. ein niedriger Nennfehlerstrom vorgesehen werden kann.

In spezieller Ausgestaltung der Erfindung kann ferner vorgesehen werden, daß in Reihe mit der Spule der elektromagnetischen Halteeinrichtung zwei elektronische Schalter liegen, wobei der erste elektronische Schalter durch die bei ungestörtem Betrieb an der Verdopplerschaltung entstehende Spannung durchgeschaltet und nur beim Auftreten der Fehlerstromsimulations-Impulse kurzzeitig dynamisch geöffnet wird, wobei der zweite elektronische Schalter durch den ersten Schalter dynamisch durchgeschaltet wird und bei seinem Öffnen einen Strom in die zusätzliche Wicklung des Summenstromwandlers fließen läßt, der die periodische kurzzeitige Fehlerstromsimulation bewirkt, und wobei die Öffnungszeiten der elektronischen Schalter so kurz gehalten sind, daß der Anker der Spule der elektromagnetischen Halteeinrichtung über diese Öffnungszeiten im angezogenen Zustand verbleibt.

Bei dieser Ausführungsform sind beide elektronischen Schalter dynamisch so gekoppelt, daß bei einem Ausfall der dynamischen Vorgänge durch Bauteildefekt, Fehlerstrom oder Nullspannung die Abschaltung und der Abfall des Ankers des Haltemagneten und ein Auslösen des mechanischen Schalters erfolgen. Durch die serielle Anordnung der beiden elektronischen Schalter mit signalmäßig dynamischer serieller Kopplung wird auch bei Ausfall eines der elektronischen Schaltglieder die sichere Abschaltung des Hubmagneten durch den dann noch funktionstüchtigen zweiten elektronischen Schalter erreicht.

Die Erfindung wird im folgenden anhand der Zeichnung näher erläutert, in der zeigen:

Fig. 1 ein Prinzipschaltbild des Fehlerstromschalters nach der Erfindung und

Fig. 2 eine abgewandelte Ausführungsform für die Hilfsspannungs-Versorgungs-Schaltung.

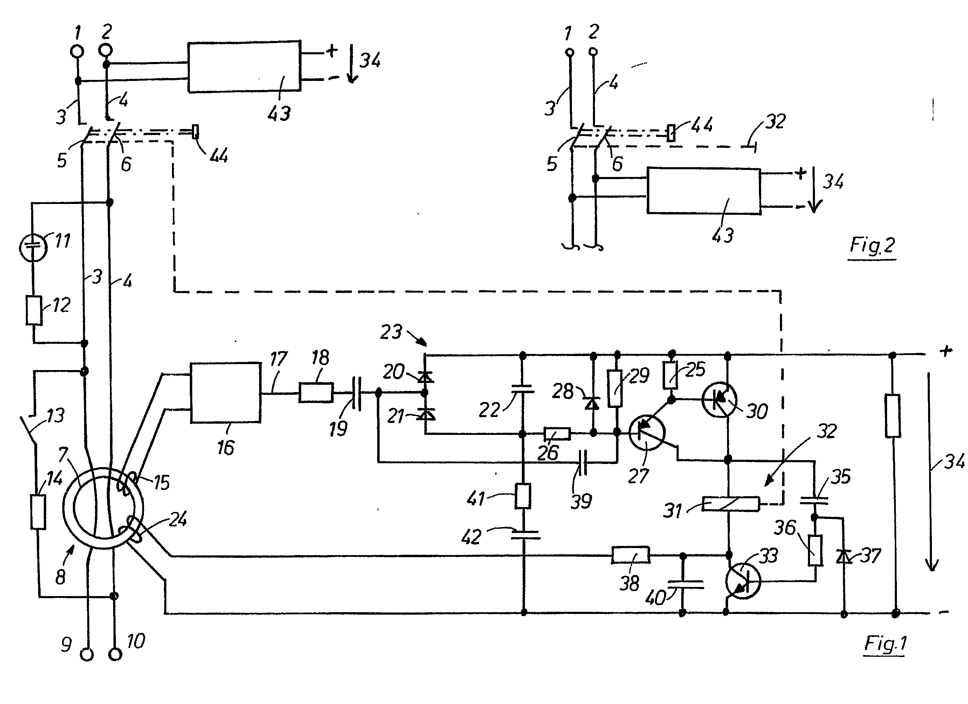

Von den Netzanschlüssen 1, 2 führen in Fig. 1 die den Strom des zu überwachenden Stromkreises führenden Leiter 3, 4 über die Schaltkontakte 5, 6 durch den Kern 7 eines Summenstromwandlers 8 hindurch zu Anschlüssen 9, 10, die zum Anschluß des zu überwachenden Stromkreises dienen. Zwischen den Leitern 3, 4 sind jeweils eine Betriebsanzeige, bestehend aus Glimmlampe 11 und Vorwiderstand 12, und eine Prüftaste 13 mit Widerstand 14 geschaltet. Bei Betätigen der Prüftaste 13 wird ein durch den Widerstand 14 begrenzter Strom am Summenstromschalter 8 vorbeigeführt, was auf den Fehlerstromschutzschalter wie ein Fehlerstrom wirkt, so daß er den zu überwachenden Stromkreis abschalten muß. Die Sekundärwicklung 15 des Summenstromwandlers wirkt mit ihrem fehlerstromproportionalen Strom auf eine übliche Grenzwertschaltung 16, deren Ausgang 17 eine positive Spannung annimmt, wenn der Strom von der Sekundärwicklung 15 her einen bestimmten Wert überschreitet.

In der bevorzugten Ausführung der Erfindung wird nun der Ausgang 17 der Grenzwertschaltung 16 über einen Widerstand 18 und einen Kondensator 19 einer aus den beiden Gleichrichtern 20 und 21 und dem Ladekondensator 22 bestehenden Spannungs-Verdoppler-Schaltung 23 zugeführt.

Der Kern 7 des Summenstromwandlers 8 trägt eine zusätzliche Wicklung 24, in die periodisch kurzzeitig ein Strom eingespeist wird, was nachfolgend noch näher erläutert wird. Bei ungestörtem Betrieb entsteht über die Rückkopplung auf die Sekundärwicklung 15 und über die Grenzwertschaltung 16 an deren Ausgang 17 eine Pulsfolge mit positiven Impulsen. Es bildet sich über die Spannungs-Verdoppler-Schaltung 23 am Kondensator 22 eine Gleichspannung in der angegebenen Polarität. Diese Gleichspannung hält einen über einen Emitterwiderstand 25 und einen Basiswiderstand 26 an den Kondensator 22 angeschlossenen Transistor 27 in durchgeschaltetem Zustand. Zwischen der Basis des Transistors 27 und der Plusseite des Kondensators 22 liegen ferner eine Zenerdiode 28 und parallel hierzu ein Widerstand 29. Beim Durchschalten des Transistors 27 wird nahezu gleichzeitig ein mit seiner Basis an den Emitter des Transistors 27 angeschlossener Transistor 30 durchgeschaltet. Die Transistoren 27 und 30 bilden zusammen einen ersten elektronischen Schalter einer Selbstüberwachungs-Schaltung.

Der Transistor 30 liegt mit seiner Emitter-Kollektor-Strecke in Reihe mit der Spule 31 einer elektromagnetischen Halteeinrichtung 32 für die Schaltkontakte 5, 6 und in Reihe mit der Kollektor-Emitter-Strecke eines weiteren Transistors 33, welcher den zweiten elektronischen Schalter der Selbstüberwachungsschaltung darstellt, an einer Hilfsspannung 34 an. Der Kollektor des Transistors 30 ist ferner über eine zur Spule 31 parallelen Leitung, die einen Kondensator 35 und einen Widerstand 36 enthält an die Basis des Transistors 33 angeschlossen. Der Schaltungspunkt zwischen Kondensator 35 und Widerstand 36 ist durch eine Gleichrichter-Diode 37 gegenüber dem Negativpol der Hilfspannung gesperrt. Nach dem Durchschalten der Transistoren 27 und 30 wird aus der Hilfsspannung 34 über den Kondensator 35 und den Widerstand 36 der Transistor 33 ebenfalls durchgeschaltet. An der Hilfsspannung 34 liegen nun in Reihe der durchgeschaltete Transistor 30, die Spule 31 und der durchgeschaltete Transistor 33. Dadurch ist die Spule 31 der elektromagnetischen Halteeinrichtung 32 stromdurchflossen, d. h. die elektromagnetische Halteeinrichtung ist erregt.

Die Kollektor Emitter-Strecke des Transistors 33 liegt zusammen mit einem Widerstand 38 in Reihe mit der zusätzlichen Wicklung 24 des Summenstromwandlers 8. Die Wicklung 24 ist über diesen Widerstand 38, die Spule 31 und den Transistor 30 an die Hilfsspannung 34 angeschlossen und also bei durchgeschaltetem Transistor 30 mit Strom gespeist, wobei aber bei durchgeschaltetem Transistor 33 die Wicklung 24 praktisch stromlos bleibt.

Durch die fortschreitende Aufladung des Kondensators 35 wird der Basisstrom des Transistors 33 jedoch geringer, der deshalb nicht mehr durchgeschaltet bleibt. Dadurch fließt über den Widerstand 38 ein Strom in die zusätzlichen Wicklung 24 des Summenstromwandlers 8, die in der bereits beschriebenen Weise über die Kopplung auf die Sekundärwicklung 15 und über die Grenzwertschaltung 16 an deren Ausgang 17 einen positiven Spannungsimpuls hervorruft. Dadurch wird einerseits die Gleichspannung am Kondensator 22 der Verdoppler-Schaltung 23 aufrechterhalten; andererseits bewirkt der positive Spannungsimpuls über den Kondensator 39, der in einem unmittelbar vom Kondensator 19 zur Basis des Transistors 27 führenden Leitungszweig liegt, eine kurzzeitige dynamische Unterbrechung des Transistors 27 und damit auch des Transistors 30. Bei dieser kurzzeitigen Unterbrechung der Stromzuführung aus der Hilfsspannung 34 bewirkt die in der Spule 31 gespeicherte Energie über einen zwischen Kollektor und Emitter des Transistors 33 liegenden Kondensator 40 und über die Diode 37 eine außerordentlich rasche Entladung des Kondensators 35. Nach Abklingen des Stromstoßes über den Kondensator 39 schalten die Transistoren 27 und 30 aufgrund der am Kondensator 22 anliegenden Gleichspannung wieder durch und in der Folge davon über die Schaltelemente 35, 36 auch der Transistor 33. Dabei wird der Stromfluß durch die zusätzliche Wicklung 24 beendet und der Ausgang 17, der von der Sekundärwicklung 15 beaufschlagten Grenzwertschaltung 16 geht auf die niedrige Spannung zurück.

Durch die nunmehr wieder einsetzende, fortschreitende Aufladung des Kondensators 35 wiederholt sich die vorbeschriebene kurzzeitige Stromeinspeisung in die Wicklung 24. Wie ersichtlich, ist die gesamte Selbstüberwachungsschaltung schwingungsfähig ausgelegt, so daß die kurzzeitige Einspeisung eines Stromes in die zusätzliche Wicklung 24 periodisch erfolgt. Die Dimensionierung der Schaltung ist auf eine bestimmte Wiederholfrequenz für die Vorgänge abgestimmt, beispielsweise auf etwa 2 KHz. Dabei ist die periodische dynamische Stromunterbrechung durch die Transistoren 27 und 30 relativ kurzzeitig, beispielsweise etwa 20 Mikrosekunden. Wegen der Trägheit der elektromagnetischen Schalteinrichtung 31 verbleibt der Anker im angezogenen Zustand.

Beim erstmaligen Einschalten der Hilfsspannung 34 liegt am Kondensator 22 noch keine Gleichspannung an. Deshalb wird dabei der Transistor 27 über die in Reihe zwischen seiner Basis und dem Minuspol der Hilfsspannung geschalteten Widerstände 26 und 41 und den Kondensator 42 dynamisch durch> gesteuert und damit der periodische Ablauf in Gang gesetzt.

Die Hilfsspannung 34 für die Stromversorgung der elektronischen Schaltung wird in üblicher Weise über eine Versorgungsschaltung 43 aus der Netzspannung erzeugt, die zwischen den Netzanschlüssen 1 und 2 und den Kontakten 5 und 6 an die Leiter 3, 4 angeschlossen ist. Zur Sicherung des Anlaufes der periodischen Vorgänge auch bei einem langsamen Ansteigen der Netzspannung kann in der Schaltung 43 eine Tyristor-Anordnung enthalten sein, die ein sprungartiges Ansteigen der Hilfsspannung 34 gewährleistet.

In der beschriebenen Anordnung des Fehlerstromschutzschalters sind alle Schaltungsteile am Aufrechterhalten der periodisch ablaufenden Vorgänge beteiligt. Die periodisch ablaufenden Vorgänge brechen ab, wenn ein Fehlerstrom in entsprechender Höhe auftritt, weil dann der Ausgang 17 der Grenzwertschaltung 16 dauernd auf positiver Spannung verbleibt. Die Vorgänge brechen aber auch ab, wenn Fehler in der Schaltung oder ihren Bauteilen auftreten. Bei Fortfall des periodischen Ablaufes wird die Spule 31 stromlos, bei einem Kurzschluß eines der beiden elektronischen Schalter 27/30 bzw. 33 wird diese Abschaltung durch den jeweils anderen übernommen. Damit ist die gesamte Schaltung selbstüberwachend ausgeführt.

Die Wirkung der elektromagnetischen Halteeinrichtung 32 mit der Spule 31 auf die Kontakte 5, 6 ist so, daß einmal geschlossene Kontakte 5, 6 während der Dauer der Erregung geschlossen gehalten werden. Bei Unterbrechung des Stromflusses in der Spule 31 und daraus folgendem Fortfall der Erregung, sei es durch Auftreten eines zu hohen Fehlerstromes oder durch einen Fehler in der Schaltung, werden die Kontakte 5, 6 geöffnet und damit der zu überwachende Stromkreis abgeschaltet.

Das Schließen der Kontakte 5, 6 erfolgt nicht unmittelbar durch einen Stromfluß in der Spule 31. Vielmehr müssen die Kontakte durch Betätigen einer gestrichelt angedeuteten Einschalttaste 44 geschlossen werden. Ein mechanisch wirkendes Schaltschloß mit einer bekannten Anordnung zur Freiauslösung bewirkt diese Funktion. Bei Anwendung der Hilfsspannungserzeugung nach Fig. 1 können die Kontakte 5, 6 mittels der Einschalttaste 44 nur geschlossen werden, solange die elektromagnetische Halteeinrichtung durch Stromfluß in der Spule 31 erregt ist. Damit ist ein Einschalten des zu überwachenden Stromkreises verhindert, wenn die Netzspannung, z.B. auch infolge eines Leiterbruches fehlt. Bei Anwendung der Hilfsspannungserzeugung nach Fig. 2, bei der die Versorgungsschaltung 43 hinter den Kontakten 5, 6 an die Leiter 3, 4 angeschlossen ist, müssen die Kontakte 5, 6 zunächst durch Betätigen der Einschalttaste 44 geschlossen werden. Erst danach kann die Spule 31 stromführend und die elektromagnetische Halteeinrichtung 32 erregt werden. Eine mechanisch wirkende Freiauslösung verhindert,daß die Kontakte 5, 6 durch Festhalten der Einschalttaste bei stromlos bleibender Spule 31 in eingeschaltetem Zustand gehalten werden können.

Durch die geschilderte erfindungsgemäße Anordnung ist ein Fehlerstromschutzschalter geschaffen worden, der bei Ausfall seiner Funktionsbereitschaft den zu schützenden Stromkreis abschaltet und somit die Weiterverwendung des nicht funktionsfähigen Fehlerstromschutzschalters verhindert. Dadurch entfällt auch die bei den bekannten Fehlerstromschutzschaltern nötige regelmäßige Funktionsprüfung. Ein weiterer Vorteil der erfindungsgemäßen Fehlerstromschutzschalter besteht darin, daß nach einem Ausfall der Netzspannung der zu überwachende Stromkreis bei Wiederkehr der Netzspannung ausgeschaltet bleibt und über die Einschalttaste bewußt eingeschaltet werden muß. Dadurch wird vermieden, daß Geräte, die bei einem Netzausfall zufällig eingeschaltet waren, beim Wiederkehren der Netzspannung unbeabsichtigt wieder anlaufen. Weiter wird durch das Abschalten bei Ausfall der Netzspannung verhindert, daß gefährliche Zustände, wie sie bei einer Nulleiterunterbrechung auftreten können, in den zu überwachenden Stromkreis hineinwirken. Bei der Anordnung der Hilfsspannungserzeugung nach Fig. 1 können dabei die Kontake 5, 6 durch Betätigen der Einschalttaste auch nicht kurzzeitig geschlossen werden. Die Anordnung nach Fig. 2, bei der die Stromversorgungsschaltung zwischen den Netzanschlüssen 1, 2 und den Kontakten 5, 6 an die Leiter 3, 4 angeschlossen ist, hat den Vorteil, daß der Fehlerstromschutzschalter bei ausgeschaltetem Zustand keinen Strom aufnimmt.

Die erfindungsgemäßen Fehlerstromschutzschalter sind besonders geeignet, überdurchschnittlich gefährdete einzelne Stromkreise zu schützen, wie z.B. Steckdosen für Heimwerker-, Hobby-, Garten- und Haushaltsgeräte.

Für diese Aufgabe sind besonders vorteilhafte Ausgestaltungen der erfindungsgemäßen Fehlerstromschutzschalter möglich. So kann z.B. der Fehlerstromschutzschalter unmittelbar in eine Steckdose für derartige Geräte eingebaut sein. Dabei kann die Anordnung so getroffen werden, daß das Einstecken eines Steckers in die Steckdose wie das Betätigen der Einschalttaste wirkt und daß beim Ziehen das Steckers die Kontakte 5, 6 unterbrochen werden. Damit können die Kontakte der Steckdose, d. h. hier die Anschlüsse 9, 10, nur unter Spannung stehen, solange ein Stecker eingesteckt ist.

## Patentansprüche

1. Fehlerstromschutzschalter zur Isolationsüberwachung elektrischer Stromkreise, mit einem Summenstromwandler (8), dessen Primärstromkreis aus den hindurchgeführten Hin- und Rückleitungen (3, 4) des zu überwachenden Stromkreises besteht und dessen Sekundärwicklung (15) auf eine elektronische Grenzwertschaltung (16) wirkt, mit einer von der elektronischen Grenzwertschaltung (16) angesteuerten, eine Spule (31) aufweisenden elektromagnetischen Halteeinrichtung (32) und mit von der elektromagnetischen Halteeinrichtung (32) gesteuerten Schaltkontakten (5, 6) zur Abschaltung des zu überwachenden Stromkreises bei Überschreiten eines bestimmten Fehlerstromes, wobei in eine zusätzliche Wicklung (24) des Summenstromwandlers (8) periodisch kurzzeitig Stromstöße eingespeist werden, welche einen Fehlerstrom simulieren, und wobei die dadurch am Ausgang (17) der elektronischen Grenzwertschaltung (16) entstehende Pulsspannung einer Auswerteschaltung (18 bis 40) zugeführt und ebenfalls zur Aussteuerung der elektromagnetischen Haltevorrichtung (32) verwendet wird, dadurch gekennzeichnet, daß bei Normalbetrieb die Spule (31) erregt ist und die Kontakte (5, 6) bei Entregung der Spule (31) öffnen, daß die Grenzwertschaltung (16), die Spule (31) und die Auswerteschaltung (18 bis 40) gemeinsam einen Oszillator bilden, welcher die in die zusätzliche Wicklung (24) eingespeisten Stromstöße erzeugt und dessen Schwingungsfähigkeit bei Auftreten eines echten Fehlerstromes unterbrochen wird, daß die periodischen Stromstöße jeweils eine so kurzzeitige Entregung der Spule (31) bewirken, daß die elektromagnetische Halteeinrichtung (32) über diese Entregungszeiten im angezogenen Zustand verbleibt und der Schwingkreis seine Schwingungsfähigkeit behält, und daß bei Unterbrechung der Schwingungsfähigkeit des Schwingkreises, – z. B. auch infolge Defektes einer seiner Bauteile –, die Spule (31) dauerhaft entregt wird, so daß die Halteeinrichtung (32) ein Öffnen der Schaltkontakte (5, 6) und damit ein Abschalten des zu überwachenden Stromkreises bewirkt.

2. Fehlerstromschutzschalter nach Anspruch 1, dadurch gekennzeichnet, daß die Auswerteschaltung (18 bis 40) eine Gleichrichter-Spannungs-Verdoppler-Schaltung (23) enthält.

3. Fehlerstromschutzschalter nach den Ansprüchen 1 oder 2, dadurch gekennzeichnet, daß in Reihe mit der Spule (31) der elektromagnetischen Halteeinrichtung (32) zwei elektronische Schalter (27/30 und 33) liegen, wobei der erste elektronische Schalter (27/30) durch die bei ungestörtem Betrieb an der Verdopplerschaltung (23) entstehende Spannung durchgeschaltet gehalten und nur beim Auftreten der Fehlerstromsimulations-Impulse kurzzeitig dynamisch geöffnet wird, wobei der zweite elektronische Schalter (33) durch den ersten Schalter (27/30) dynamisch durchgeschaltet wird und bei seinem Öffnen einen Strom in die zusätzliche Wicklung (24) des Summenstromwandlers (8) fließen läßt, der die periodische kurzzeitige Fehlerstromsimulation bewirkt, und wobei die Öffnungszeiten der elektronischen Schalter (27/30, 33) so kurz gehalten sind, daß der Anker der Spule (31) der elektromagnetischen Halteeinrichtung (32) über diese Öffnungszeiten im angezogenen Zustand verbleibt.

**Claims**

1. Fault-current-breaker for monitoring the isolation of electrical circuits, with a cumulative current transformer 8 whose primary circuit consists of the fed-through up-and-down lines (3, 4) of the circuit to be monitored and whose secondary winding 15 operates on an electronic design-limit circuit 16, with an electromagnetic retaining device 32 controlled by the electronic design-limit circuit 16 and equipped with a coil 31, and with switch contacts 5, 6 controlled by the electromagnetic retaining device 32 for switching off the monitored circuit when a certain fault current is exceeded, wherein electric impulses, which simulate a fault current, are absorbed periodically for a short period into a supplementary winding 24 of the cumulative current transformer 8, and the pulse voltage thus produced at the exit 17 of the electronic design-limit circuit 16 is conducted to an analysis circuit 18 to 40 and is likewise used for the control of the electromagnetic retaining device 32. The fault-current-breaker is characterised in that in normal use the coil 31 is excited and the contacts 5, 6 open when the coil 31 is de-energised, in that the design-limit circuit 16, the coil 31 and the analysis circuit 18 to 40 together form an oscillator which produces the electric impulses absorbed into the supplementary winding 24 and whose oscillation capability is interrupted by the presence of a genuine fault-current, and in that the periodic electric impulses each produce a de-energisation of the coil 31 so short in duration that the electromagnetic retaining device 32 remains, during these de-energisation periods, in the tightened state and the oscillatory circuit retains its oscillation capability, and in that when the oscillation capability of the oscillatory circuit is interrupted – for example as a result of a defect in one of its components – the coil 31 is lastingly de-energised, so that the retaining device 32 opens the switch contacts 5, 6 and thus produces a closedown of the monitored circuit.

2. Fault-current-breaker as in Claim 1, characterised in that the analysis circuit 18 to 40 contains a rectifier-voltage-doubler circuit 23.

3. Fault-current-breaker as in Claim 1 or 2, characterised in that in series with the coil 31 of the electromagnetic retaining device 32 there are two electronic switches 27/30 and 33. The first electronic switch 27/30 is retained in the switches-through position by the voltage produced by the uninterrupted operation of the doubler circuit 23 and is dynamically opened for a short period by the presence of the fault-current simulation impulses. The second electronic switch 33 is dynamically switched through by the first switch 27/30 and on opening allows a current to flow into the supplementary winding 24 of the cumulative current transformer 8, which operates the periodic short fault-current simulation. The opening times of the electronic switches 27/30, 33 are kept so short that the anchor of the coil 31 of the electromagnetic retaining device 32 remains in the tightened state during these open periods.

## Revendications

1. Disjoncteur de protection de courant de fuite pour le contrôle d'isolation de circuits électriques, comportant un transformateur de courant comporte (8), dont le circuit de courant primaire se compose des conducteurs traversants d'entrée et de sortie (3, 4) du circuit électrique à contrôler et dont l'enroulement secondaire (15) agit sur un circuit électronique de valeur limite (16), un dispositif électromagnétique de maintien (32) comportant une bobine (31) et excité par le circuit électronique de valeur limite (16), ainsi que des contacts de commutation (5, 6), commandés par le dispositif électromagnétique de maintien (32) pour couper le circuit électrique à contrôler lors du dépassement d'un courant de fuite déterminé, tandis que dans un enroulement additionnel (24) du transformateur de courant comporte (8) sont appliquées périodiquement et pendant une courte durée des impulsions de courant qui simulent un courant de fuite et que la tension pulsée, engendrée ainsi à la sortie (17) du circuit électronique de valeur limite (16) est appliquée à un circuit d'évaluation (18 à 40) et est également utilisée pour le réglage du dispositif électromagnétique de maintien (32), caractérisé par le fait que en marche normale, la bobine (31) est excitée et les contacts (5, 6) sont ouverts lors de la désexcitation de la bobine (31), que le circuit de valeur limite (16), la bobine (31) et le circuit d'évaluation (18 à 40) forment ensemble un oscillateur, qui produit les impulsions de courant appliquées à l'enroulement additionnel (24) et dont l'aptitude à oscillation est interrompue lorsqu'il se produit un courant de fuite effectif, que les impulsions périodiques de courant produisent chacune une désexcitation de la bobine (31) et de si courte durée que le dispositif électromagnétique de maintien (32) reste en état d'activation pendant ces périodes de désexcitation et le circuit oscillant conserve son aptitude à oscillation, et en ce que, lors d'une interruption d'aptitude à oscillation du circuit oscillant – par exemple par suite d'un défaut d'un de ses composants è, la bobine (31) est désexcitée en permanence de sorte que le dispositif de maintien (32) produit une ouverture des contacts de commutation (5, 6) et par conséquent une coupure du circuit électrique à contrôler.

2. Disjoncteur de protection de courant de fuite selon la revendication 1, caractérisé par le fait que le circuit d'évaluation (18 à 40) contient un circuit redresseur-doupleur de tension (23).

3. Disjoncteur de courant de fuite selon une des revendications 1 ou 2, caractérisé par le fait qu'il est prévu en série avec la bobine (31) du dispositif électromagnétique de maintien (32) deux interrupteurs électroniques (27/30 et 33), le premier interrupteur électronique (27/30) étant maintenu fermé par la tension produite, en cas de fonctionnement perturbé, dans le circuit doubleur (23) et étant ouvert dynamiquement pendant une courte durée seulement lorsqu'il se produit des impulsions de simulation de courant de fuite, tandis que le second interrupteur électronique (33) est fermé dynamiquement par le premier interrupteur (27/30) et laisse passer, lors de son ouverture, un courant dans l'enroulement additionnel (24) du transformateur de courant comporte (8), qui produit la simulation de courant de fuite périodique et de courte durée, les temps d'ouverture des interrupteurs électroniques (27/30, 33) étant maintenus suffisamment courts pour que l'armature de la bobine (31) du dispositif électromagnétique de maintien (32) reste en état d'attraction pendant ces temps d'ouverture.

Fig.1

Fig.2